# EUROPÄISCHE PATENTSCHRIFT

(11) **EP 2 818 434 B1**
(45) Veröffentlichungstag und Bekanntmachung des Hinweises auf die Patenterteilung: **15.08.2018**
(21) Anmeldenummer: 13173419.6
(22) Anmeldetag: 24.06.2013
(51) Int. Cl.: B65G 19/02, B65G 19/20, B65G 19/22, B61B 10/02

(54) **Fördervorrichtung und Verfahren zur Positionierung eines Halteadapters an einer Förderkette**
Conveyor device and a method for positioning a holding adapter on a conveyor chain
Dispositif de transport et procédé de positionnement d'un adaptateur de support au niveau d'une chaîne de transport

(43) Veröffentlichungstag der Anmeldung: 31.12.2014
(73) Patentinhaber: Dematic Logistics GmbH, 33609 Bielefeld (DE)
(72) Erfinder: OTTO Thomas, 33659 Bielefeld (DE)
(74) Vertreter: Kleine, Hubertus

(56) Entgegenhaltungen:
- FR-A1- 2 028 030
- US-A- 4 292 897
- US-A- 5 507 233

## Beschreibung

Die vorliegende Erfindung betrifft eine Fördervorrichtung zur Beförderung von an Halteadaptern hängenden Gegenständen gemäß dem Obergriff des Anspruchs 1 sowie ein Verfahren zur Positionierung eines Halteadapters an einer Förderkette.

Solche Fördervorrichtungen dienen zur Beförderung von hängenden Gegenständen. Ein gattungsgemäßes Kettenglied einer Förderkette einer solchen Fördervorrichtung ist beispielsweise aus der US 5,507,233 bekannt.

Die dort beschriebene Fördervorrichtung weist eine aus Kettengliedern bestehende Förderkette auf, die über Reibrollen angetrieben wird. An jedem der Kettenglieder ragen an der Unterseite senkrecht nach unten und senkrecht zur Förderrichtung ausgerichtete Schubkörper mit Mitnehmerstegen hervor, mit denen Halteadapter bzw. an diesen Halteadaptern hängende Gegenstände, beispielsweise Kleidungsstücke wie Hemden oder Jacken oder auch Taschen in Förderrichtung verschoben werden.

Insbesondere bei einer als sogenannter "Sorter" ausgebildeten Fördervorrichtung ist es wichtig, die Position der Halteadapter und damit der zu fördernden Gegenstände genau zu kennen und einen vorbestimmten Abstand zwischen den Halteadaptern einzuhalten, um einzelne Halteadapter und die an diesen hängenden Gegenstände bei Bedarf über eine Weiche aus einem Bereich der Fördervorrichtung in einen anderen Bereich der Fördervorrichtung aussortieren zu können.

Im oben genannten Stand der Technik wird dies durch Synchronisierungseinheiten, die formschlüssig in die Kettenglieder eingreifen und so die jeweilig Geschwindigkeit einer Ab/-oder Zuführstation an die Geschwindigkeit der Förderkette anzupassen.

Aufgabe der vorliegenden Erfindung ist es, eine Fördervorrichtung und ein Verfahren zur Positionierung eines Halteadapters an einer Förderkette bereitzustellen, mit der die Übergabe eines Halteadapters und damit des mit
Hilfe des Halteadapters beförderten Gegenstandes an einer vorbestimmten Position der Förderkette weiter vereinfacht ist.

Diese Aufgabe wird durch eine Fördervorrichtung mit den Merkmalen des Anspruchs 1 sowie durch ein Verfahren zur Positionierung eines Halteadapters an einer Förderkette mit den Merkmalen des Anspruchs 7 gelöst. Bei der erfindungsgemäßen Förderkette sind zumindest ein Teil der Kettenglieder als Schubkettenglieder ausgebildet, die einen Basiskörper und eine an der Unterseite des Basiskörpers angeformte Schubeinheit aufweisen, und bei denen an in Förderrichtung voneinander beabstandeten Enden des Basiskörpers Kupplungsabschnitte zur schwenkbaren Verbindung mit einem benachbarten Kettenglied angeformt sind und auf dessen Oberseite Lager zur Lagerung von Lauf- oder Führungsrollen angeformt sind, mit denen die Schubkettenglieder in einer ersten Laufbahn eines Schienenprofils geführt sind, wobei die Schubeinheit zwei aus der Unterseite des Basiskörpers hervorstehende Mitnehmer aufweist, wobei ein in Förderrichtung vorderer erster Mitnehmer kürzer ist als ein hinterer zweiter Mitnehmer, wobei der Abstand zwischen den beiden Mitnehmern so bemessen ist, dass ein Kopfteil des Halteadapters spielfrei oder weitgehend spielfrei zwischen den beiden Mitnehmern aufnehmbar ist . Zwischen zweien solcher Schubkettenglieder ist dabei mindestens eine als Verbindungskettenglied ausgebildetes Kettenglied angeordnet, welches an seiner Unterseite so ausgebildet ist, dass Halteadapter von den Verbindungskettengliedern nicht mitgenommen werden.

Das Schienenprofil dieser Fördervorrichtung weist einen Koppelabschnitt auf, in dem die Halteadapter zwischen die Mitnehmer der Schubkettenglieder einkoppelbar sind.

Durch die derart ausgestaltete Fördervorrichtung ist eine zuverlässige Beabstandung und Beförderung der hängenden Gegenstände in einfacher Weise ermöglicht.

Durch die unterschiedlich lang ausgebildeten Mitnehmer ist es ermöglicht, das ein Halteadapter, der in einer zweiten Laufbahn des Schienenprofils einer Fördervorrichtung geführt ist, durch leichtes Absenken unter dem vorderen kürzeren Mitnehmer durchlaufen kann und erst von dem hinteren längeren Mitnehmer gehalten wird. Beim anschließenden Wiederanstieg der zweiten Laufbahn wird das Kopfteil des Halteradapters nach oben zwischen die beiden Mitnehmer bewegt, so dass auch bei einer Verlangsamung oder einem Anhalten der Förderkette der Halteadapter in seiner Position zwischen den beiden Mitnehmern gehalten wird.

Vorteilhafte Ausführungsvarianten der Erfindung sind Gegenstand der Unteransprüche.

Gemäß einer vorteilhaften Ausführungsvariante sind die Mitnehmer als senkrecht aus der Unterseite des Basiskörper hervorstehende Stege ausgebildet, mit denen das Kopfteil der Halteadapter erfassbar ist, wobei solche Stege kostengünstig und einfach herstellbar an dem Basiskörper des Schubkettengliedes anformbar sind.

Besonders bevorzugt ist zumindest einer der Mitnehmer, insbesondere der zweite längere Mitnehmer t-förmig geformt, wobei ein Halsstück des t-förmigen Mitnehmers sich aus der Unterseite des Basiskörpers erstreckt und dann senkrecht zum Halsstück ausgerichtetes flächiges Querstück des t-förmigen Mitnehmers an einem der Unterseite des Basiskörpers abgewandten Ende des Halsstückes angeformt ist, wobei das Querstück senkrecht zur Längsachse des Basiskörpers ausgerichtet. Die t-förmige Gestaltung insbesondere des hinteren längeren Mitnehmers ermöglicht eine breitere Anschlagfläche für das Kopfteil des jeweiligen Halteadapters.

In einer bevorzugten Ausgestaltung der erfindungsgemäßen Förderkette beträgt der Abstand zwischen zwei Mitnehmern von durch Verbindungskettengliedern miteinander verbundenen Schubkettenglieder zwischen 200 mm und 300 mm, wodurch eine hohe Bestückungszahl bei der Kette mit Halteadaptern bzw. daran zu befördernden hängenden Gegenständen ermöglicht ist.

Der Basiskörper der Schubkettenglieder und der Verbindungskettenglieder weist nach einer bevorzugten Ausführungsvariante seitliche Reibrollenandrückflächen auf, an die Reibrollen zum Antrieb der Förderkette andrückbar sind, sowie ein auf einer Oberseite des Basiskörpers vorgesehenes Lager zur Lagerung von Lauf- oder Führungsrollen. Der Reibrollenantrieb ermöglicht einen besonders verschleiß- und geräuscharmen Antrieb der Förderkette.

In einer besonderen Ausführungsvariante der erfindungsgemäßen Fördervorrichtung ist der Koppelabschnitt des Schienenprofils als lokal begrenzte Absenkung gegenüber einer Verschiebeebene in der zweiten Laufbahn ausgebildet, wobei ein lokaler Tiefpunkt in der Absenkung der zweiten Laufbahn gegenüber der Hauptverschiebeebene so bemessen ist, dass der vordere erste Mitnehmer des Schubkettengliedes in diesem Bereich außer Eingriff mit dem Kopfteil des Halteadapters steht. Dadurch ist ein zuverlässiges Eingliedern der Kopfteile der Halteadapter zwischen die Mitnehmer Schubeinheit der Schubkettenglieder gewährleistet.

Das erfindungsgemäße Verfahren zur Positionierung eines Halteadapters an einer Förderkette zeichnet sich durch die folgenden Verfahrensschritte aus:
a. Einführen des Halteadapters in einen Abschnitt der Förderkette zwischen einen zweiten Mitnehmer eines in Förderrichtung vorderen Schubkettengliedes und einen ersten Mitnehmer eines in Förderrichtung hinteren Schubkettengliedes,
b. Mitnahme des Haltedapters in Förderrichtung durch einen in Förderrichtung vor dem zweiten Mitnehmer angeordneten ersten Mitnehmer des in Förderrichtung hinteren Schubkettengliedes in einen Koppelabschnitt des Schienenprofils,
c. Absenken des Halteadapters unter den ersten Mitnehmer und Weiterbefördern des Halteadapters in Förderrichtung durch den zweiten Mitnehmer im Koppelabschnitt des Schienenprofils,
d. Anheben des Halteadapters zwischen den ersten Mitnehmer und den zweiten Mitnehmer der Förderkette im Koppelabschnitt des Schienenprofils.

Dadurch ist eine zuverlässige Positionierung des Halteadapters an einer vorstimmten Position der Förderkette ermöglicht.

Nachfolgende wird eine bevorzugte Ausführungsvariante der Erfindung anhand der beigefügten Zeichnungen näher erläutert. Es zeigen:
- Figur 1: eine perspektivische Ansicht einer Ausführungsvariante eines Schubkettengliedes mit daran angekoppelten Verbindungskettengliedern,
- Figur 2: eine Seitenansicht des Abschnitts einer Förderkette aus Figur 1,
- Figur 3: eine perspektivische Ansicht eines Ausschnitts eines Koppelabschnitts einer Fördervorrichtung mit Darstellung eines Schienenprofils und darin verlaufender Förderkette und Halteadapter,
- Figur 4: eine Schnittdarstellung senkrecht zur Förderrichtung der Fördervorrichtung aus Figur 3,
- Figur 5: eine Seitenansicht des Ausschnitts der Fördervorrichtung aus Figur 3 ohne Seitenabdeckung und
- Figur 6: eine Seitenansicht eines Ausschnitts der Fördervorrichtung mit integriertem Koppelabschnitt zur Darstellung der Einkopplung der Halteadapter zwischen die Mitnehmer der Förderkette.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Schubkettenglied, Halteadapter, Förderkette, Fördervorrichtung und anderer Teile. Diese Begriffe sind nicht einschränkend zu verstehen, das heißt, durch verschiedene Arbeitsstellungen oder die spiegelsymmetrische Auslegung oder dergleichen können sich diese Bezüge ändern.

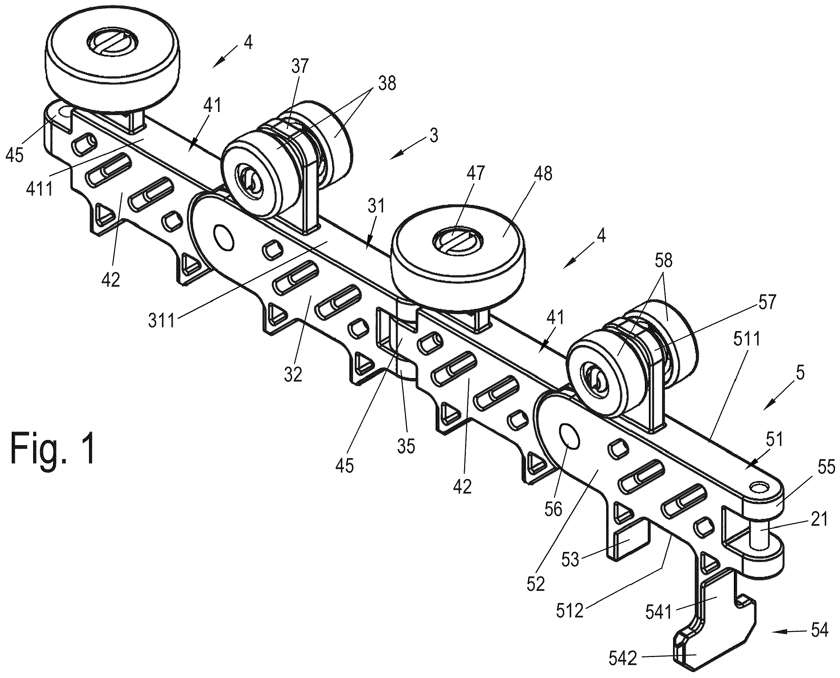

In den Figuren 1 bis 6 ist mit den Bezugszeichen 2 eine Förderkette einer Fördervorrichtung bezeichnet, die aus mehreren Kettengliedern 3, 4, 5 besteht, welche untereinander gelenkig miteinander verbunden sind und die in einer ersten, oberen Laufbahn 71 eines Schienenprofils 7 der Fördervorrichtung geführt ist.

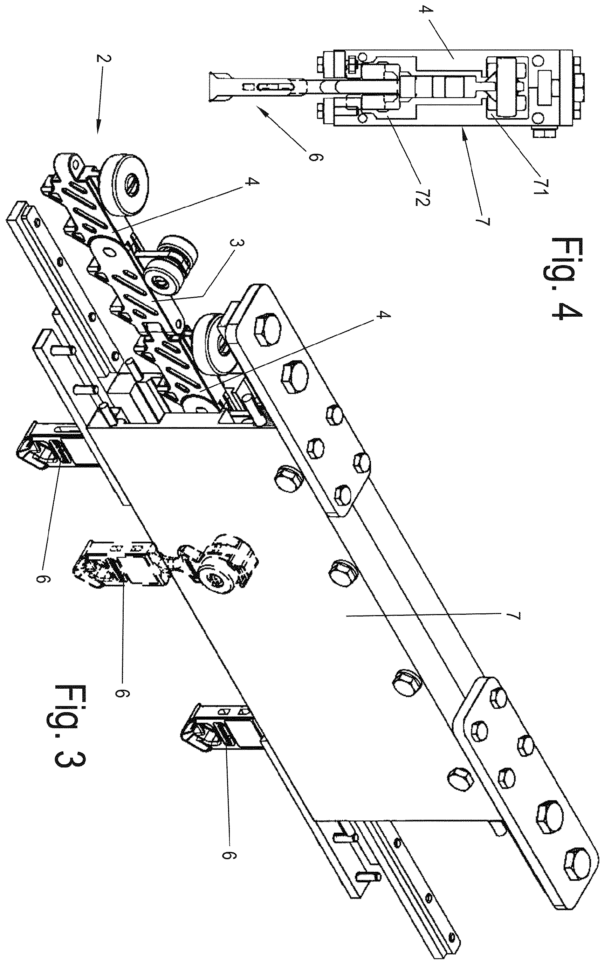

Jedes der Kettenglieder 3, 4, 5 weist einen Basiskörper 31, 41, 51 auf, mit seitlichen Reibrollenandrückflächen 32, 42, 52, an die (nicht dargestellte) Reibrollen zum Antrieb der Förderkette 2 andrückbar sind, um die Förderkette 2 in einer Förderrichtung x im Schienenprofil 7 zubewegen. Zur Führung der Kettenglieder 3, 4, 5 in der ersten Laufbahn 71 des Schienenprofils 7, gezeigt in den Figuren 3 bis 5, sind auf der Oberseite 311, 411, 511 der Basiskörper 31, 41, 51 Lager 37, 47, 57 zur Lagerung von Lauf- oder Führungsrollen 38, 48, 58 vorgesehen. Die Führungsrollen 48 sind dabei bevorzugt um eine vertikale Achse drehbar, während die Laufrollen 38, 58 bevorzugt paarweise beidseits des Lagers 37, 57 angeordnet sind und auf einer Lauffläche der Laufbahn 72 des Schienenprofils 7 in Förderrichtung x laufen.

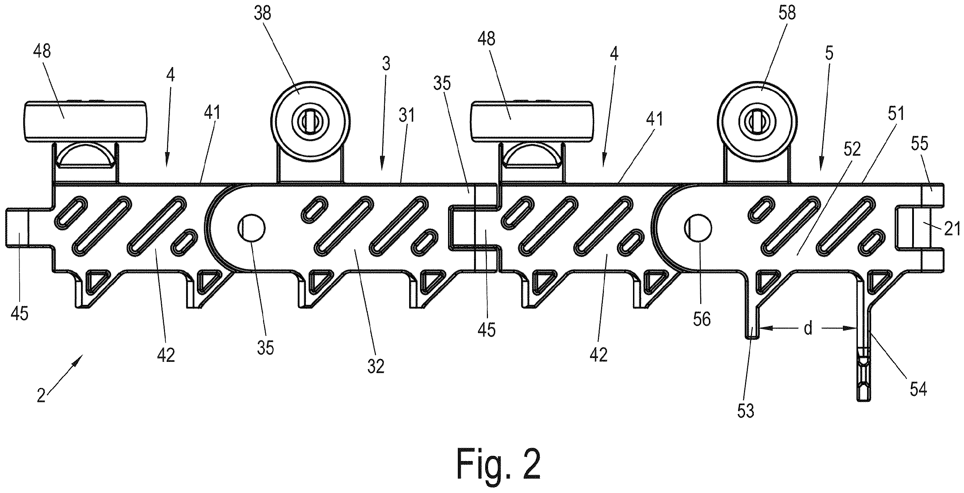

Wie in den Figuren 1 und 2 gezeigt ist, besteht die Förderkette 2 einerseits aus als Schubkettenglieder 5 ausgebildete Kettenglieder und andererseits aus als Verbindungskettenglieder 3, 4 ausgebildeten Kettengliedern.

Während die Verbindungskettenglieder 3, 4 an der Unterseite 312, 412 des jeweiligen Basiskörpers 31, 41 eben ausgebildet sind oder, wie in den Figuren 1 und 2 dargestellt, mit kurzen Stegen versehen sind, deren Erstreckung vertikal nach unten so bemessen ist, dass im Betrieb in einer unterhalb der ersten Laufbahn 71 angeformten zweiten Laufbahn 72 verfahrbare Halteadapter 6 mit diesen kurzen Stegen nicht in Berührung kommen und dementsprechend ein Verschieben der Halteadapter durch die Verbindungskettenglieder 3, 4 nicht erfolgt.

Die Schubkettenglieder 5 hingegen zeichnen sich dadurch aus, dass aus der Unterseite 512 des Basiskörpers 51 zwei Mitnehmer 53, 54 hervorstehen, wobei ein in Förderrichtung x vorderer erster Mitnehmer 53 in seiner Längserstreckung nach unten in Richtung der zweiten Laufbahn 72 bzw. in Richtung der in dieser geführten Halteadaptern 6 kürzer ist als ein hinterer zweiter Mitnehmer 54.

Der Abstand d zwischen den beiden Mitnehmern 53, 54 ist dabei so bemessen, dass ein Kopfteil 61 des Halteadapters 6 spielfrei oder weitgehend spielfrei zwischen den beiden Mitnehmern 53, 54 aufnehmbar ist.

Diese aus dem Basiskörper 51 nach unten hervorstehenden Mitnehmer 53, 54, die bevorzugt als senkrecht aus der Unterseite 512 des Basiskörpers 51 hervorstehende Stege ausgebildet sind, sind dabei in ihrer Länge so bemessen, dass nach Einschleusen eines Halteadapters 6 in den Bereich der Fördervorrichtung, in dem die mit dem Schubkettengliedern 5 ausgestattete Förderkette 2 läuft, der Halteadapters 6 von den Mitnehmern 53, 54 erfasst und in Förderrichtung verschoben wird.

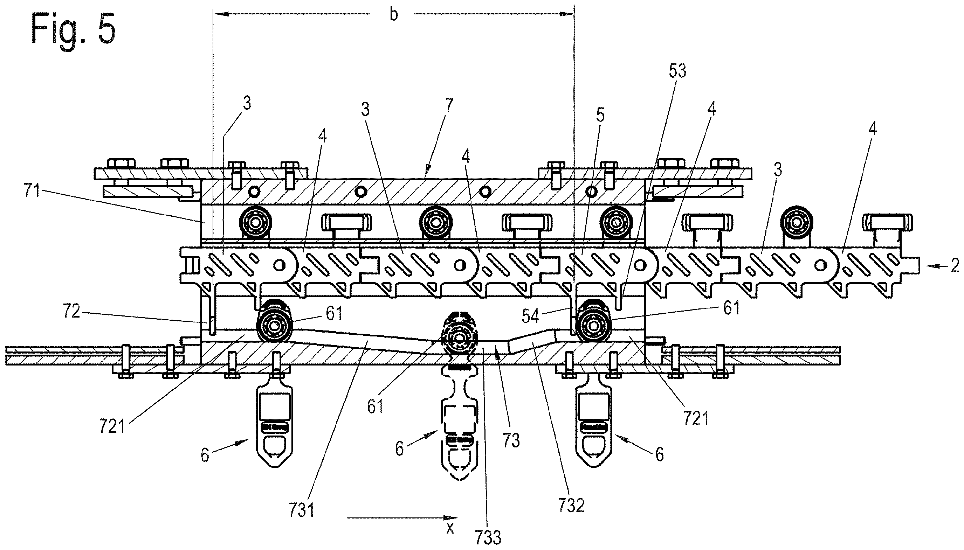

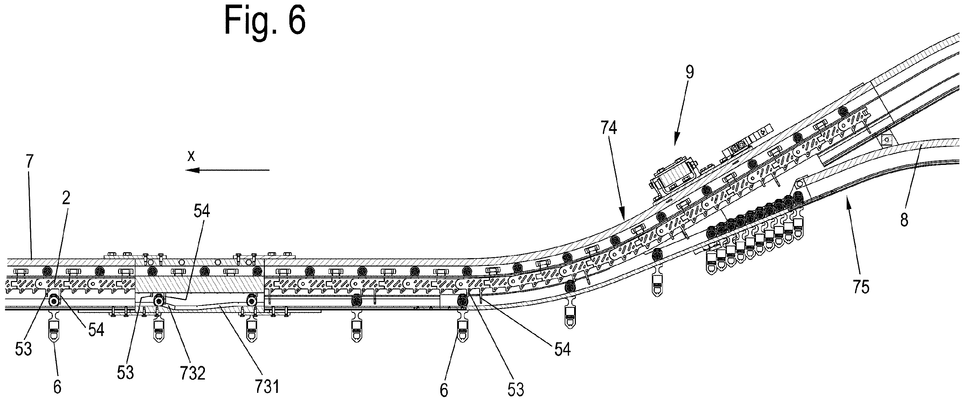

Das Verfahren zur Positionierung des Halteadapters 6 an der oben beschriebenen Förderkette 2, sprich der Einschleusvorgang der Halteadapter 6 in den Bereich der Fördervorrichtung, in dem die mit dem Schubkettengliedern 5 ausgestattete Förderkette 2 läuft, wird im Folgenden anhand der Figuren 5 und 6 beschrieben.

Zunächst werden, wie in Figur 6 gezeigt ist, die Halteadapter 6 aus einem weiteren Schienenprofil 8 kommend, das in eine Weiche 75 des Schienenprofils 7 mündet, in das Schienenprofil 7, bevorzugt im Bereich einer Gefällestrecke 74 des Schienenprofils 7, eingeschleust. Hinter der Weiche 75 ist an dem Schienenprofil 7 eine Vereinzelungsvorrichtung 9 angeordnet, an der die von dem weiteren Schienenprofil 8 herangeführten Halteadapter 6 aufgestaut und in vorbestimmten Abständen b, definiert durch den Abstand zwischen zwei zweiten Mitnehmern 54 von durch Verbindungskettengliedern 3, 4 miteinander verbundenen Schubkettengliedern 5, zur schwerkraftbedingten Weiterbewegung freigibt.

Jeweils ein Halteadapter 6 befindet sich nun irgendwo im Bereich zwischen einen zweiten Mitnehmer 54 eines in Förderrichtung x vorderen Schubkettengliedes 5 und einen ersten Mitnehmer 53 eines in Förderrichtung x hinteren Schubkettengliedes der Förderkette 2.

Bei der Weiterbewegung der Halteadapter 6 in einen horizontal verlaufenden Bereich des Schienenprofils 7 werden die Kopfteile 61 der Halteadapter 6 von einem der ersten Mitnehmer 53 der Förderkette 2 eingeholt und in einen Koppelabschnitt des Schienenprofils 7 geschoben, der in einer Detailansicht in Figur 5 dargestellt ist und in dem die Aufnahme eines Kopfteils 61 eines jeweiligen Halteadapters 6 zwischen die beiden Mitnehmer 53, 54 eines Schubkettengliedes 5 erfolgt.

Wie in Figur 5 gezeigt ist, werden die Halteadapter 6 zwischen den Mitnehmern 53, 54 der Schubkettenglieder 51 in dem Koppelabschnitt des Schienenprofils 7 eingekoppelt. Dieser Koppelabschnitt des Schienenprofils 7 ist dabei bevorzugt als lokal begrenzte Absenkung 73 gegenüber einer Hauptverschiebeebene 721 in der zweiten Laufbahn 72 ausgebildet.

Nach dem Einschleusen des Halteadapters 6 in den Bereich des Koppelabschnitts des Schienenprofils 7 passieren zunächst die Verbindungskettenglieder 3, 4 der Förderkette 2 den Kopf 61 des Halteadapters 6. Sobald ein Schubkettenglied 5 in den Koppelabschnitt eintritt, stößt erst der vordere erste Mitnehmer 53 des Schubkettengliedes 5 an das Kopfteil 61 des Halteadapters 6 an und schiebt den Halteadapter 6 in Förderrichtung x in eine lokal begrenzte Absenkung 73 der zweiten Laufbahn 72 hinein.

Die Tiefe der Absenkung 73 der zweiten Laufbahn 72 ist dabei so bemessen, dass der erste kürzere Mitnehmer 53 kurz vor Erreichen eines lokalen Tiefpunktes 733 über den Kopf 61 des Halteadapters 6 hinweg fährt, so dass der Halteadapter 6 erst von dem in Förderrichtung x hintern zweiten Mitnehmer 54 angestoßen und aus dem lokalen Tiefpunkt 733 der zweiten Laufbahn 72 über einen Anstiegsbereich 732 zurück in die Hauptverschiebeebene 721 der Laufbahn 72 weitergeschoben wird.

Sobald die Hauptverschiebeebene 721 der zweiten Laufbahn 72 von den Halteadapter 6 wieder erreicht ist, ist das Kopfteil 61 des Halteadapters 6 zwischen den beiden Mitnehmern 53, 54 des Schubkettengliedes 5 spielfrei zumindest weitgehend spielfrei aufgenommen und ermöglicht so eine definierte Positionierung des Halteadapters 6 und damit des an diesem hängenden Gegenstand an der Förderkette 2, so dass bei der Weiterförderung entlang des Schienenprofils 7 ein zuverlässiges Aussortieren der an den Halteadaptern 6 hängenden Gegenstände ermöglicht ist.

Der hintere zweite Mitnehmer 54, der den Halteadapter 6 bei Bewegung der Förderkette 2 in Förderrichtung schiebt, ist bevorzugt t-förmig geformt. Dabei ist ein Halsstück 541 des t-förmigen Mitnehmers 54 in einer Ebene senkrecht zur Förderrichtung x schmaler geformt als ein senkrecht zum Halsstück 541 ausgerichtetes flächiges Querstück 542 des t-förmigen Mitnehmers 54, das an einem der Unterseite 512 des Basiskörpers 51 abgewandten Ende des Halsstückes 541 angeformt ist. Das Querstück 542 ist dabei senkrecht zur Längsachse des Basiskörpers bzw. zur Förderrichtung x ausgerichtet. Auch der vordere Mitnehmer 53 weist eine flächige, senkrecht zur Förderrichtung x ausgerichtet Anschlagfläche auf.

Jeweils zwei als Schubkettenglieder 5 ausgebildete Kettenglieder der Förderkette 2 sind bevorzugt in einem Abstand d zwischen zwei zweiten Mitnehmern 54 von durch Verbindungskettengliedern 3, 4 miteinander verbundenen Schubkettengliedern 5 zwischen 200 und 300 mm beabstandet, um einerseits eine möglichst dichte Bestückung der Fördervorrichtung bzw. der Förderkette zu ermöglichen und andererseits die Zuführung bzw. Aussortierung vorbestimmter hängender Gegenstände an den Halteadaptern 6 zu gewährleisten.

### Bezugszeichenliste

- 2: Förderkette
- 3: Kettenglied, Verbindungskettenglied
- 31: Basiskörper
- 311: Oberseite
- 312: Unterseite
- 32: Reibrollenandrückflächen
- 37: Lager
- 38: Laufrollen

- 4: Kettenglied, Verbindungskettenglied
- 41: Basiskörper
- 411: Oberseite
- 412: Unterseite
- 42: Reibrollen Andrückflächen
- 47: Lager
- 48: Führungsrollen

- 5: Kettenglied, Schubkettenglied
- 51: Basiskörper
- 511: Oberseite
- 52: Reibrollen Andrückflächen
- 53: Mitnehmer
- 54: Mitnehmer
- 541: Halsstück
- 542: Querstück
- 57: Lager
- 58: Laufrollen

- 6: Halteadapter
- 61: Kopfteil

- 7: Schienenprofil
- 71: obere erste Laufbahn
- 72: zweite Laufbahn
- 721: Hauptverschiebeebene
- 73: Absenkung
- 732: Anstiegsbereich
- 733: Tiefpunkt
- 74: Gefälleabschnitt
- 75: Weiche

- 8: Schienenprofil
- 9: Vereinzelungsvorrichtung
- d: Abstand
- x: Förderrichtung

## Patentansprüche

1. Fördervorrichtung zur Beförderung von hängenden Gegenständen, aufweisend ein Schienenprofil (7), eine in einer ersten Laufbahn (71) des Schienenprofils (7) in einer Förderrichtung (x) bewegbare, aus mehreren Kettengliedern (3, 4, 5) bestehende Förderkette (2), Halteadapter (6) zur Halterung jeweils eines zu befördernden Gegenstandes, wobei jedes der Kettenglieder (3, 4, 5) einen Basiskörper (31, 41, 51) aufweist, an dessen in Förderrichtung (x) voneinander beabstandeten Enden Kupplungsabschnitte (54, 55) zur schwenkbaren Verbindung mit einem benachbarten Kettenglied (3, 4) angeformt sind, wobei ein Teil der Kettenglieder (3, 4, 5) als Schubkettenglieder (5) ausgebildet sind, wobei eine Schubeinheit an der Unterseite des Basiskörpers (51) jedes Schubkettenglieds (5) angeordnet ist, wobei zwischen zwei Schubkettengliedern (5) mindestens ein als Verbindungskettenglied (3,4) ausgebildetes Kettenglied angeordnet ist, und wobei die Halteadapter (6) jeweils ein in einer zweiten Laufbahn (72) des Schienenprofils (7) rollbar gelagertes Kopfteil (61) aufweisen, **dadurch gekennzeichnet, dass** die Schubeinheit zwei aus der Unterseite (512) des Basiskörpers (51) hervorstehende Mitnehmer (53, 54) aufweist, wobei ein in Förderrichtung (x) vorderer erster Mitnehmer (53) kürzer ist als ein hinterer zweiter Mitnehmer (54), wobei der Abstand (d) zwischen den beiden Mitnehmern (53, 54) so bemessen ist, dass ein Kopfteil (61) des Halteadapters (6) spielfrei oder weitgehend spielfrei zwischen den beiden Mitnehmern (53, 54) aufnehmbar ist, dass das Schienenprofil (7) einen Koppelabschnitt aufweist, in dem die Halteadapter (6) zwischen die Mitnehmer (53, 54) der Schubkettenglieder (5) einkoppelbar sind und dass der Koppelabschnitt des Schienenprofils (7) als lokal begrenzte Absenkung (73) gegenüber einer Hauptverschiebeebene (721) in der zweiten Laufbahn (72) ausgebildet ist, wobei ein lokaler Tiefpunkt (733) in der Absenkung (73) der zweiten Laufbahn (72) gegenüber der Hauptverschiebeebene (721) so bemessen ist, dass der vordere erste Mitnehmer (53) des Schubkettengliedes (5) in diesem Bereich außer Eingriff mit dem Kopfteil (61) des Halteadapters (6) steht, so dass das Kopfteil (61) des Halteadapters (6) erst von dem in Förderrichtung (x) hintern zweiten Mitnehmer (54) angestoßen und aus dem lokalen Tiefpunkt (733) der zweiten Laufbahn (72) über einen Anstiegsbereich (732) zurück in die Hauptverschiebeebene (721) der zweiten Laufbahn (72) weitergeschoben wird.

2. Fördervorrichtung nach Anspruch 1, **dadurch gekennzeichnet, dass** die Mitnehmer (53, 54) als senkrecht aus der Unterseite (512) des Basiskörpers (51) hervorstehende Stege ausgebildet sind.

3. Fördervorrichtung nach Anspruch 2, **dadurch gekennzeichnet, dass** zumindest einer der Mitnehmer (53, 54) T-förmig geformt ist, wobei ein Halsstück (541) des T-förmigen Mitnehmers (54) sich aus der Unterseite (512) des Basiskörpers (51) erstreckt und ein senkrecht zum Halsstück (541) ausgerichtetes flächiges Querstück (542) des T-förmigen Mitnehmers (54) an einem der Unterseite (512) des Basiskörpers (51) abgewandten Ende des Halsstückes (541) angeformt ist, wobei das Querstück (542) senkrecht zur Längsachse des Basiskörpers (51) ausgerichtet ist.

4. Fördervorrichtung nach einem der vorstehenden Ansprüche, **dadurch gekennzeichnet, dass** der Basiskörper (51) seitliche Reibrollenandrückflächen (52) aufweist, an die Reibrollen zum Antrieb der Förderkette (2) andrückbar sind, sowie ein auf einer Oberseite (511) des Basiskörpers (51) vorgesehenes Lager (57) zur Lagerung von Lauf- oder Führungsrollen (58).

5. Fördervorrichtung nach Anspruch 4, **dadurch gekennzeichnet, dass** der Abstand (b) zwischen zwei zweiten Mitnehmern (54) von durch Verbindungskettengliedern (3, 4) miteinander verbundenen Schubkettengliedern (5) zwischen 200 mm und 300 mm beträgt.

6. Fördervorrichtung nach Anspruch 4 oder 5, **dadurch gekennzeichnet, dass** ein Basiskörper (31, 41) der Verbindungskettenglieder (3, 4) seitliche Reibrollenandrückflächen (32, 42) aufweist, an die Reibrollen zum Antrieb der Förderkette (2) andrückbar sind, sowie ein auf einer Oberseite (311, 411) des Basiskörpers (31, 41) vorgesehenes Lager (37, 47) zur Lagerung von Lauf- oder Führungsrollen (38, 48).

7. Verfahren zur Positionierung eines Halteadapters (6) an einer Förderkette (2) einer Fördervorrichtung gemäß Anspruch 1, mit den Verfahrensschritten:
a. Einführen des Haltedapters (6) in einen Abschnitt der Förderkette (2) zwischen einen zweiten Mitnehmer (54) eines in Förderrichtung (x) vorderen Schubkettengliedes (5) und einen ersten Mitnehmer (53) eines in Förderrichtung (x) hinteren Schubkettengliedes (5),
b. Mitnahme des Haltedapters (6) in Förderrichtung (x) durch einen in Förderrichtung (x) vor dem zweiten Mitnehmer (54) angeordneten ersten Mitnehmer (53) des in Förderrichtung (x) hinteren Schubkettengliedes (5) in einen Koppelabschnitt des Schienenprofils (7),
c. Absenken des Haltedapters (6) unter den ersten Mitnehmer (53) und Weiterbefördern des Haltedapters (6) in Förderrichtung (x) durch den zweiten Mitnehmer (54) im Koppelabschnitt des Schienenprofils (7),
d. Anheben des Haltedapters (6) zwischen den ersten Mitnehmer (53) und den zweiten Mitnehmer (54) der Förderkette (2) im Koppelabschnitt des Schienenprofils (7).

## Claims

1. A conveyor device for conveying hanging objects, comprising a rail profile (7), a conveyor chain (2), which is movable in a first runway (71) of the rail profile (7) in a conveying direction (x) and consists of multiple chain links (3, 4, 5), retaining adapters (6) for each holding one object to be conveyed, wherein each of the chain links (3, 4, 5) has a base body (31, 41, 51), on the ends of which spaced apart from one another in the conveying direction (x), coupling sections (54, 55) for the pivotable connection to an adjacent chain link (3, 4) are formed, wherein a part of the chain links (3, 4, 5) are formed as thrust chain links (5), wherein a thrust unit is arranged on the lower side of the base body (51) of each thrust chain link (5), wherein at least one chain link formed as a connecting chain link (3, 4) is arranged between two thrust chain links (5), and wherein the retaining adapters (6) each have a head part (61) mounted in a rollable manner in a second runway (72) of the rail profile (7),
**characterized in that** the thrust unit comprises two tappets (53, 54) protruding from the bottom side (512) of the base body (51), wherein a front first tappet (53) in the conveying direction (x) is shorter than a rear second tappet (54), wherein the spacing (d) between the two tappets (53, 54) is dimensioned such that a head part (61) of the retaining adapter (6) can be received between the two tappets (53, 54) without play or substantially without play,
the rail profile (7) has a coupling section, in which the retaining adapters (6) can be coupled between the tappets (53, 54) of the thrust chain links (5), and the coupling section of the rail profile (7) is formed as a locally delimited depression (73) in relation to a main displacement plane (721) in the second runway (72), wherein a local low point (733) in the depression (73) of the second runway (72) in relation to the main displacement plane (721) is dimensioned such that the front first tappet (53) of the thrust chain link (5) is disengaged from the head part (61) of the retaining adapter (6) in this region, and therefore the head part (61) of the retaining adapter (6) is first struck by the rear second tappet (54) in the conveying direction (x) and pushed further out of the local low point (733) of the second runway (72) via a rising region (732) back into the main displacement plane (721) of the second runway (72).

2. The conveyor device according to Claim 1, **characterized in that** the tappets (53, 54) are formed as webs protruding perpendicularly out of the bottom side (512) of the base body (51).

3. The conveyor device according to Claim 2, **characterized in that** at least one of the tappets (53, 54) is formed T-shaped, wherein a neck part (541) of the T-shaped tappet (54) extends out of the bottom side (512) of the base body (51) and a transverse part (542) of the T-shaped tappet (54) aligned perpendicularly to the neck part (541) is formed on an end of the neck part (541) facing away from the bottom side (512) of the base body (51), wherein the transverse part (542) is aligned perpendicularly to the longitudinal axis of the base body (51).

4. The conveyor device according to any one of the preceding claims, **characterized in that** the base body (51) comprises lateral friction roller pressing faces (52), against which friction rollers can be pressed to drive the conveyor chain (2), and a bearing (57) provided on a top side (511) of the base body (51) for mounting running rollers or guide rollers (58).

5. The conveyor device according to Claim 4, **characterized in that** the spacing (b) between two second drivers (54) of thrust chain links (5) connected to one another by connecting chain links (3, 4) is between 200 mm and 300 mm.

6. The conveyor device according to Claim 4 or 5, **characterized in that** a base body (31, 41) of the connecting chain links (3, 4) has lateral friction roller pressing faces (32, 42), against which friction rollers can be pressed to drive the conveyor chain (2), and a bearing (37, 47) provided on a top side (311, 411) of the base body (31, 41) for mounting running rollers or guide rollers (38, 48).

7. A method for positioning a retaining adapter (6) on a conveyor chain (2) of a conveyor device according to Claim 1, comprising the following method steps:
a. inserting the retaining adapter (6) into a section of the conveyor chain (2) between a second tappet (54) of a front thrust chain link (5) in the conveying direction (x) and a first tappet (53) of a rear thrust chain link (5) in the conveying direction (x),
b. carrying along the retaining adapter (6) in the conveying direction (x) by way of a first tappet (53), arranged in front of the second tappet (54) in the conveying direction (x), of the rear thrust chain link (5) in the conveying direction (x) into a coupling section of the rail profile (7),
c. lowering the retaining adapter (6) underneath the first tappet (53) and conveying the retaining adapter (6) further in the conveying direction (x) by way of the second tappet (54) into the coupling section of the rail profile (7),
d. raising the retaining adapter (6) between the first tappet (53) and the second tappet (54) of the conveying chain (2) in the coupling section of the rail profile (7).

## Revendications

1. Dispositif de transport pour le transport d'objets suspendus, présentant un profilé de rail (7), une chaîne de transport (2) capable de se déplacer dans une première piste (71) du profilé de rail (7) dans un sens de transport (x) et composée de plusieurs maillons (3, 4, 5), des adaptateurs de maintien (6) pour retenir chacun un objet à transporter, chacun des maillons (3, 4, 5) comportant un corps de base (31, 41, 51) sur lequel sont formés, aux extrémités distantes l'une de l'autre dans le sens de transport (x), des sections de couplage (54, 55) servant à l'assemblage pivotant avec un maillon (3, 4) voisin, une partie des maillons (3, 4, 5) étant conformés comme des maillons de poussée (5), une unité de poussée étant disposée sur la face inférieure du corps de base (51) de chaque maillon de poussée (5), au moins un maillon conformé comme un maillon de liaison (3, 4) étant disposé entre deux maillons de poussée (5), et chacun des adaptateurs de maintien (6) présentant une partie de tête (61) supportée avec possibilité de roulement dans une deuxième piste (72) du profilé de rail (7),
**caractérisé en ce que** l'unité de poussée comporte deux entraîneurs (53, 54) qui dépassent de la face inférieure (512) du corps de base (51), un premier entraîneur (53) situé devant dans le sens de transport (x) étant plus court qu'un deuxième entraîneur (54) situé derrière, la distance (d) entre les deux entraîneurs (53, 54) étant dimensionnée de telle sorte qu'une partie de tête (61) de l'adaptateur de maintien (6) puisse être reçue sans jeu ou sensiblement sans jeu entre les deux entraîneurs (53, 54),
**en ce que** le profilé de rail (7) présente une partie de couplage dans laquelle les adaptateurs de maintien (6) peuvent être couplés entre les entraîneurs (53, 54) des maillons de poussée (5) et
**en ce que** la partie de couplage du profilé de rail (7) est conformée comme un creux (73) délimité localement par rapport à un plan de translation principal (721) dans la deuxième piste (72), un point le plus profond localisé (733) dans le creux (73) de la deuxième piste (72) par rapport au plan de translation principal (721) étant dimensionné de telle façon que le premier entraîneur (53) situé sur l'avant du maillon de poussée (5) n'est pas en prise dans cette zone avec la partie de tête (61) de l'adaptateur de maintien (6), de sorte que la partie de tête (61) de l'adaptateur de maintien (6) n'est poussée que par le deuxième entraîneur (54) venant derrière dans le sens de transport (x) et ramenée dans le plan de translation principal (721) de la deuxième piste (72) au-delà du point le plus profond localisé (733) de la deuxième piste (72), en passant par une zone ascendante (732).

2. Dispositif de transport selon la revendication 1, **caractérisé en ce que** les entraîneurs (53, 54) sont conformés comme des barrettes dépassant perpendiculairement de la face inférieure (512) du corps de base (51).

3. Dispositif de transport selon la revendication 2, **caractérisé en ce qu'**au moins un des entraîneurs (53, 54) est en forme de T, une partie de col (541) de l'entraîneur en forme de T (54) s'étendant à partir de la face inférieure (512) du corps de base (51) et une partie transversale plate (542) de l'entraîneur en forme de T (54) perpendiculaire à la partie de col (541) étant formée sur une extrémité de la partie de col (541) orientée à l'opposé de la face inférieure (512) du corps de base (51), la partie transversale (542) étant orientée perpendiculairement à l'axe longitudinal du corps de base (51).

4. Dispositif de transport selon l'une des revendications précédentes, **caractérisé en ce que** le corps de base (51) présente des surfaces latérales d'appui de galets de frictions (52) sur lesquelles des galets de frictions peuvent appuyer pour entraîner la chaîne de transport (2), ainsi qu'un palier (57) prévu sur une face supérieure (511) du corps de base (51) pour l'appui de galets de roulement ou de guidage (58).

5. Dispositif de transport selon la revendication 4, **caractérisé en ce que** la distance (b) entre deux deuxièmes entraîneurs (54) de maillons de poussée (5) reliés entre eux par des maillons de liaison (3, 4) mesure entre 200 mm et 300 mm.

6. Dispositif de transport selon la revendication 4 ou 5, **caractérisé en ce qu'**un corps de base (31, 41) des maillons de liaison (3, 4) présente des surfaces latérales d'appui de galets de frictions (32, 42) sur lesquelles les galets de frictions destinés à l'entraînement de la chaîne de transport (2) peuvent être appuyés, ainsi qu'un palier (37, 47) prévu sur une face supérieure (311, 411) du corps de base (31, 41) pour supporter des galets de roulement ou de guidage (38, 48).

7. Procédé pour le positionnement d'un adaptateur de maintien (6) sur une chaîne de transport (2) d'un dispositif de transport selon la revendication 1, comprenant les étapes de procédé suivantes :
a. introduction de l'adaptateur de maintien (6) dans une partie de la chaîne de transport (2) comprise entre un deuxième entraîneur (54) d'un maillon de poussée (5) venant devant dans le sens de transport (x) et un premier entraîneur (53) d'un maillon de poussée (5) venant derrière dans le sens de transport (x),
b. entraînement de l'adaptateur de maintien (6) dans le sens de transport (x) par un premier entraîneur (53), disposé avant le deuxième entraîneur (54) dans le sens de transport (x), du maillon de poussée (5) venant derrière dans le sens de transport (x) dans une partie de couplage du profilé de rail (7),
c. abaissement de l'adaptateur de maintien (6) en dessous du premier entraîneur (53) et poursuite du déplacement de l'adaptateur de maintien (6) dans le sens de transport (x) par le deuxième entraîneur (54) dans la partie de couplage du profilé de rail (7),
d. soulèvement de l'adaptateur de maintien (6) entre le premier entraîneur (53) et le deuxième entraîneur (54) de la chaîne de transport (2) dans la partie de couplage du profilé de rail (7).
